# EUROPEAN PATENT APPLICATION

(11) **EP 4 840 347 A1**
(43) Date of publication of application: **18.11.2026**
(21) Application number: 26174605.1
(22) Date of filing: 24.04.2026
(51) Int. Cl.: A42B 3/04, G02B 23/12, G02B 27/01

(54) **HELMET SHROUD ASSEMBLY WITH MODULAR INTERFACE**

(30) Priority: 05.05.2025 US 202563800360 P
(71) Applicant: Wilcox Industries Corp., Newington, NH 03801 (US)
(72) Inventor: GRAHAM, Patrick K., New Hampshire, 03801 (US); RIEL, Robert E., New Hampshire, 03801 (US); LEMIRE, Gary M., New Hampshire, 03801 (US)
(74) Representative: FRKelly

(57) **Abstract**

A helmet shroud assembly is configured to be mounted to a front portion of a helmet and includes a main housing configured to be affixed to the helmet. A helmet mount assembly interface portion is configured to couple to a helmet mount assembly for supporting a visual augmentation system forward of an eye of a user. An input interface comprises at least one electrical connector configured to receive electrical power and data and an output interface disposed on the helmet mount assembly interface portion. The output interface comprises a plurality of electrical contacts configured to engage corresponding contacts of the helmet mount assembly upon coupling. Circuitry disposed within the main housing electrically couples the input interface and the output interface.

## Description

### CROSS REFERENCE TO RELATED APPLICATION

This application claims the priority benefit of U.S. Provisional Patent Application No. 63/800,360 filed May 5, 2025. The aforementioned application is incorporated herein by reference in its entirety.

### BACKGROUND

The present invention relates a helmet attachment systems and, more particularly, to a helmet shroud assembly having a modular power and data interface configured for quick connection and disconnection between a helmet mount assembly and a power supply and a visual augmentation pack.

Visual augmentation systems (VAS), including head-up displays (HUDs) and night vision devices (NVDs), have evolved significantly beyond traditional image intensification technologies. Exemplary NVDs include advanced night vision goggles (ANVGs) and enhanced night vision goggles (ENVGs), which incorporate thermal fusion technology that combines image intensification with thermal imaging. Modern VAS devices may incorporate a variety of advanced features, such as integrated HUD features, augmented reality (AR) elements, and the ability to display visual content from external sources, including streaming video. These external inputs can overlay visual information within the user's field of view, such as navigational data, targeting information, and other indicators, augmented reality (AR) features, which can provide real-time object identification, waypoints, environmental data, and other information that is dynamically overlaid onto the user's field of view, and video feeds from video streaming devices.

In many implementations, the VAS is detachably coupled to a helmet mount assembly, which, in turn, is detachably secured to a front-mounted shroud or interface plate on the helmet. This modular configuration is particularly critical in military and tactical scenarios, where operators may need to rapidly don or doff the VAS in response to changing mission demands or environmental conditions.

However, external devices such as external power supplies and external input devices which provide enhanced visual content such as HUD and AR features and external video feeds are commonly coupled to the VAS using a cabled connection, for example, using a multiconductor cable terminated with a ruggedized circular connector. In such cases, in order to remove a helmet-mounted VAS from a helmet mount assembly, the user must first disconnect the electrical connector from the VAS and then remove the device from the helmet. This is difficult to do with one hand, e.g., when the soldier is carrying a weapon in the other hand.

The present disclosure contemplates a new and improved helmet shroud assembly which provides improved integration of power, data, and image transfer and routing in such modem vision systems which advantageously allows the operator to quickly don or doff a VAS while maintaining system connectivity to external visual augmentation sources.

### SUMMARY

The present disclosure provides a helmet shroud with power and data interface that provides a modular interface between external components and a helmet mount assembly which, in turn, is operably coupled to a visual augmentation system such as night vision device or head up display.

In one aspect, a helmet shroud assembly is configured to be mounted to a front portion of a helmet and includes a main housing configured to be affixed to the helmet. A helmet mount assembly interface portion is configured to couple to a helmet mount assembly for supporting a visual augmentation system forward of an eye of a user. An input interface comprises at least one electrical connector configured to receive electrical power and data and an output interface disposed on the helmet mount assembly interface portion. The output interface comprises a plurality of electrical contacts configured to engage corresponding contacts of the helmet mount assembly upon coupling. Circuitry disposed within the main housing electrically couples the input interface and the output interface.

In a more limited aspect, the input interface comprises at least one electrical connector configured to receive power, data, or a combination thereof.

In another more limited aspect, the input interface comprises at least one electrical connector selected from the group consisting of a circular multipin connector, a coaxial connector, and a USB connector.

In another more limited aspect, the input interface comprises a coaxial connector configured to receive a signal representative of video data, image data, overlay data, control data, or any combination thereof from a local or remote imaging device.

In another more limited aspect, the input interface comprises an antenna configured to receive a wireless signal representative of data selected from the group consisting of image data, video data, overlay data, control data, and any combination thereof.

In another more limited aspect, the input interface is operably coupled to a wireless transceiver.

In another more limited aspect, the input interface comprises a connector housing supported on the main housing and is electrically coupled to a main circuit board within the main housing.

In another more limited aspect, the main circuit board is operatively coupled to an output interface housing supporting the output interface.

In another more limited aspect, the helmet shroud assembly further comprises a cover disposed on a rear side of the main housing, wherein the cover is configured to at least partially enclose an interior of the main housing.

In another more limited aspect, the helmet shroud assembly further comprises one or more openings formed in the main housing and configured to receive a mechanical fastener for attaching the helmet shroud assembly to the helmet.

In another more limited aspect, the interface portion comprises an interface plate.

In another more limited aspect, the output interface comprises a contact array exposed through an opening in the interface plate.

In a further aspect, a system comprises the helmet mount assembly as described herein in combination with any one or more of the helmet, the helmet mount assembly, and the visual augmentation system.

In a further aspect, a system comprises the helmet shroud assembly as described herein and a remote device configured to transmit electrical power, data, or both to the helmet shroud assembly.

In a more limited aspect, the remote device comprises one or more battery packs and video processing electronics, the remote device configured to transmit electrical power and data to the helmet shroud assembly.

In another more limited aspect, the remote device is configured to be mounted to a rear portion of the helmet.

In another more limited aspect, the remote device is configured to wirelessly transmit data to the helmet shroud assembly wherein the helmet shroud assembly is configured to receive the data via an antenna and route the data to the output interface for presentation by the visual augmentation system.

One advantage of the present development resides in its ability to be adapted for future developed vision systems that require power, data, and image transfer routing to and from external systems simply by changing the power and data cable connections.

Still further advantages and benefits of the present development will become apparent to those of ordinary skill in the art upon reading and understanding the following detailed description of the preferred embodiments.

### BRIEF DESCRIPTION OF THE DRAWINGS

The invention may take form in various components and arrangements of components, and in various steps and arrangements of steps. The drawings are only for purposes of illustrating preferred embodiments and are not to be construed as limiting the invention.
FIG. 1 is an isometric view of a helmet having a helmet shroud assembly according to a first embodiment of the present disclosure mounted thereon.
FIG. 2 is an isometric view of the helmet shroud assembly appearing in FIG. 1 with the helmet and helmet mount assembly omitted.
FIG. 3 is an enlarged isometric view of the helmet shroud assembly appearing in FIG. 1.
FIG. 4 is an exploded isometric view of the helmet shroud assembly appearing in FIG. 1.
FIG. 5 is an isometric view of a helmet having a helmet shroud assembly according to a second embodiment of the present disclosure mounted thereon.
FIG. 6 is an isometric view of the helmet shroud assembly appearing in FIG. 5 with the helmet and helmet mount assembly omitted.
FIG. 7 is an enlarged isometric view of the helmet shroud assembly appearing in FIG. 5.
FIG. 8 is an exploded isometric view of the helmet shroud assembly appearing in FIG. 5.
FIG. 9 is an enlarged, exploded, fragmentary isometric view of the helmet shroud assembly appearing in FIG. 5 illustrating the sealed USB-C connection in detail.
FIG. 10 is a basic block diagram of the power/data shroud system appearing in FIGS. 1-4.
FIG. 11 is a basic block diagram of the power/data shroud system appearing in FIGS. 5-9.
FIG. 12 is a more detailed functional block diagram illustrating the helmet shroud assembly system appearing in FIGS. 1-4.
FIG. 13 is a more detailed functional block diagram illustrating the helmet shroud assembly system appearing in FIGS. 5-9.

Reference will now be made in detail to presently preferred embodiments of the invention, one or more examples of which are illustrated in the accompanying drawings. Each example is provided by way of explanation of the invention, not limitation of the invention, which may be embodied in various forms. Therefore, specific structural and functional details disclosed herein are not to be interpreted as limiting but merely as a basis for the claims and as a representative basis for teaching one skilled in the art to variously employ the present inventive concept in virtually any appropriately detailed structure. Further, the terms and phrases used herein are not intended to be limiting but rather to provide an understandable description of the present development. In fact, it will be apparent to those skilled in the art that modifications and variations can be made in the present invention without departing from the scope thereof. For instance, features illustrated or described as part of one embodiment may be used on another embodiment to yield a still further embodiment. Thus, it is intended that the present invention covers such modifications and variations as come within the scope of the appended claims.

The terms "a" or "an," as used herein, are defined as one or more than one. The term "another," as used herein, is defined as at least a second or more. The terms "including" and/or "having" as used herein, are defined as comprising (i.e., open transition). The term "coupled" or "operatively coupled," as used herein, is defined as indirectly or directly connected.

As used in this application, the terms "front," "rear," "upper," "lower," "upwardly," "downwardly," "left," "right," and other orientation descriptors are intended to facilitate the description of the exemplary embodiment(s) of the present invention and are not intended to limit the structure thereof to any particular position or orientation.

All numbers herein are assumed to be modified by the term "about," unless stated otherwise. The recitation of numerical ranges by endpoints includes all numbers subsumed within that range (e.g., 1 to 5 includes 1, 1.5, 2, 2.75, 3, 3.80, 4, and 5).

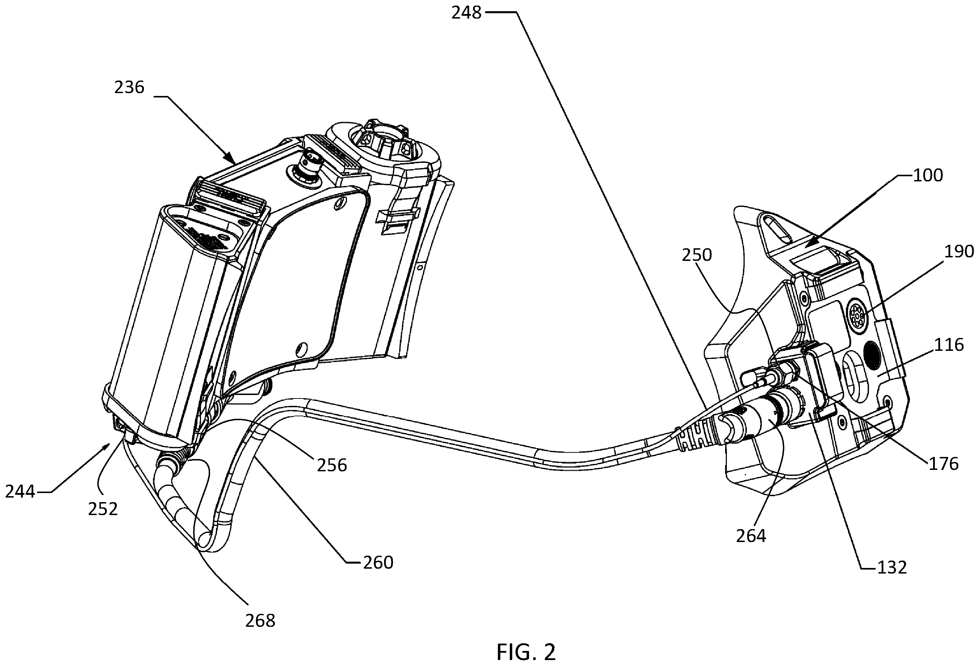

Referring now to the drawings, where like reference numbers represent like components throughout the several views, and with specific reference to FIGS. 1-4 and 10, FIG. 1 depicts a power and data shroud assembly **100** coupled to a helmet **104.** The illustrated helmet is exemplary only and may be any suitable military or tactical helmet, including but not limited to an Integrated Head Protection System (IHPS) helmet, Modular Integrated Communications Helmet (MICH), Advanced Combat Helmet (ACH), Enhanced Combat Helmet (ECH), among others.

The power and data shroud assembly **100** is coupled to the helmet **104** using one or more threaded fasteners **108.** The shroud assembly **100** includes a main housing **110,** which may be formed of any suitable material. In embodiments, the main housing **110** is formed of a polymer or reinforced polymer composite material. In embodiments, the main housing **110** may be formed by a molding process, such as injection molding. In alternative embodiments, the main housing **110** may be formed via an overmolding process. In further alternative embodiments, the main housing **110** may be formed via an additive manufacturing process.

The threaded fasteners **108** pass through clearance openings **112** in the main housing **110** and engage an aligned threaded anchor point (not shown) on the helmet, which may be, e.g., a threaded insert formed of a metal such as stainless steel or aluminum. In embodiments, the fasteners **108** accommodate a standard attachment pattern for front helmet shroud, such as a 3-hole pattern as illustrated. Alternative attachment patterns are also contemplated, such as a single-hole pattern. It will be recognized that, as an alternative to, or in addition to, a threaded fastener attachment system, other attachment mechanisms may be provided, as hooks, straps, brackets, and the like.

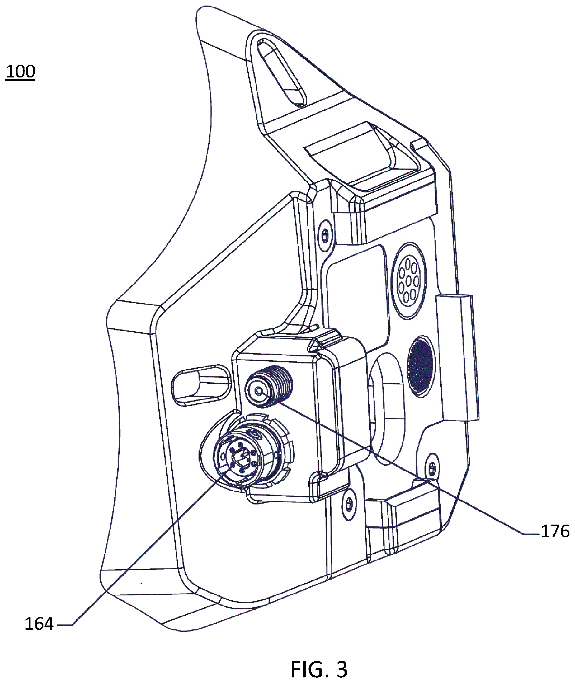

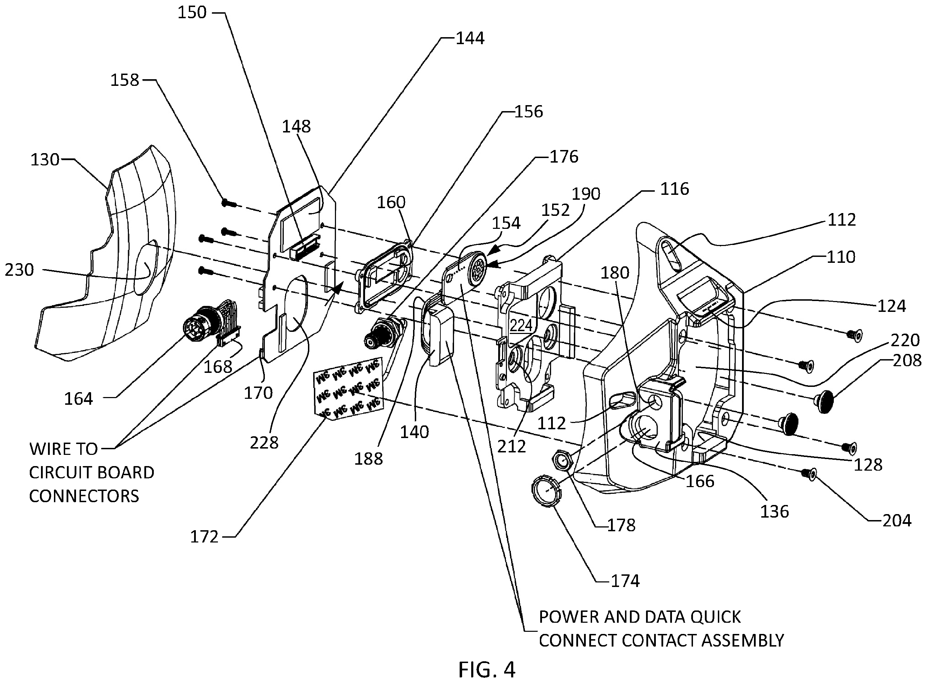

As best seen in FIGS. 3 and 4, the main housing **110** is coupled to an interface portion comprising a plate **116** configured to detachably couple to a helmet mount assembly **120.** The interface plate **116** may be formed of any suitable material, such as aluminum or other metal material and includes engagement features for detachable coupling to the helmet mount assembly **120.** In the illustrated embodiment, the engagement features comprise upper and lower slots, lips, grooves, or receptacles **124** and **128,** respectively, which engage complementary tongues or tabs (not shown) on the helmet mount assembly **120.** In embodiments, the helmet mount assembly **120** includes features for vertical adjustment, tilt adjustment, and fore-and-aft adjustment, as well as pivoting movement between deployed and stowed positions, as would be understood by persons skilled in the art. In embodiments, the helmet mount assembly **120** is a G24Xe helmet mount available from Wilcox Industries Corp. (Newington, New Hampshire).

The shroud assembly **100** includes a rear cover **130.** The rear cover at least partially encloses the interior of the main housing. In certain embodiments, the rear cover **130** is formed of an elastomeric material that serves to increase frictional engagement between the shroud assembly **100** and the exterior surface of the helmet **104.**

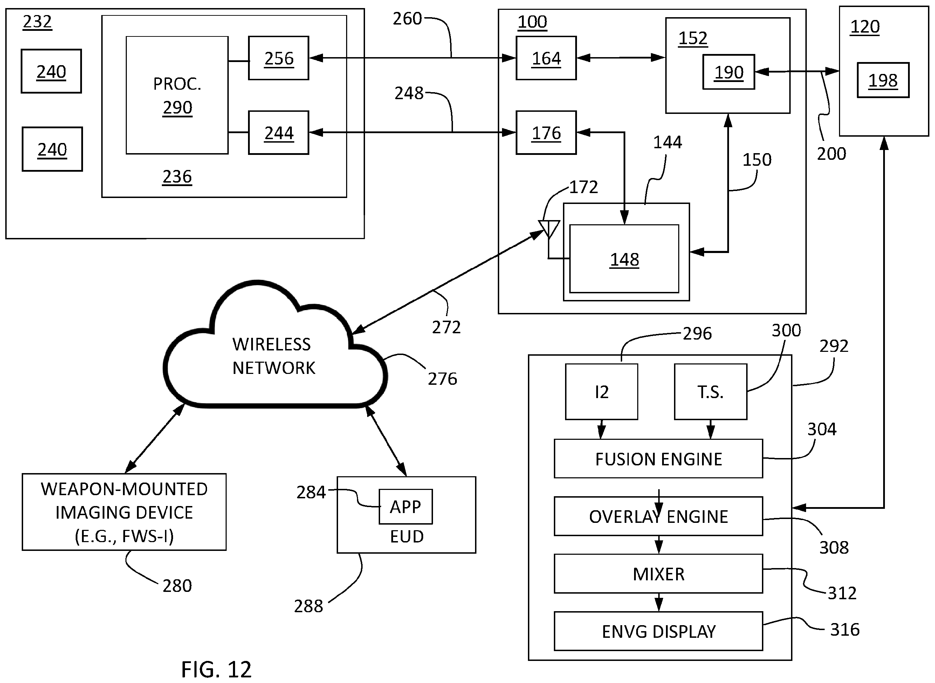

The shroud assembly **100** includes a power and data contact assembly **132** having a side housing **136** and a front housing **140.** A main circuit board **144** is received within the main housing **110** and includes a radio frequency (RF) transceiver **148** and associated processing electronics. The RF transceiver **148,** and corresponding wireless transceivers of networked devices such as a weapon-mounted imaging device **280** (see FIG. 12) or end user device (EUD) (see FIG. 12), are configured to communicate wirelessly over a wireless network **276** (see FIG. 12).

In embodiments, the imaging device **280** is a component associated with a smart weapon system In embodiments, the weapon system is a WILCOX FUSION DELTA weapon system (Wilcox Industries Corp., Newington, NH).

The wireless network **276** may support communication of digital information using any suitable wireless technology including, for example, any one or more of Intra-Soldier Wireless (ISW), Bluetooth, Bluetooth Low Energy (BLE), ultra-wideband (UWB), 900 MHz, 2.4 GHz, 5.4 GHz, short-range, long range, Wi-Fi, cellular, 5G, 4G, personal communication system (PCS), and/or other suitable wireless interface protocol. In certain embodiments, the transceiver **148** is advantageously an ultra wideband (UWB) transceiver, although other wireless technologies are also contemplated, such as Bluetooth, 5G, and others. The main circuit board **144** includes a connector **150** mounted on a surface thereof configured to operatively couple with a mating connector **154** (hidden and shown with broken lining) on a power and data quick connect circuit board **152.** A circuit board retainer **156** is disposed between the main circuit board **144** and the power and data quick connect circuit board **152.** The connector **150** extends through an opening **160** in the retainer **156** and engages the connector **154.** Threaded fasteners **158** pass through clearance openings in the main board **150,** and clearance openings in the retainer **156** to secure the main and power and data quick connect circuit boards **144, 152** to the main housing **110.**

A circular connector **164** includes a wire-to-circuit board connector **168** which is electrically coupled to a complementary connector **170** on the main board **144.** The connector **164** may be a Fischer style multi-pin circular connector although other types of multipin connectors are also contemplated. The connector **164** is received within an opening **166** in the side housing **136** and secured therein with a threaded nut **174.**

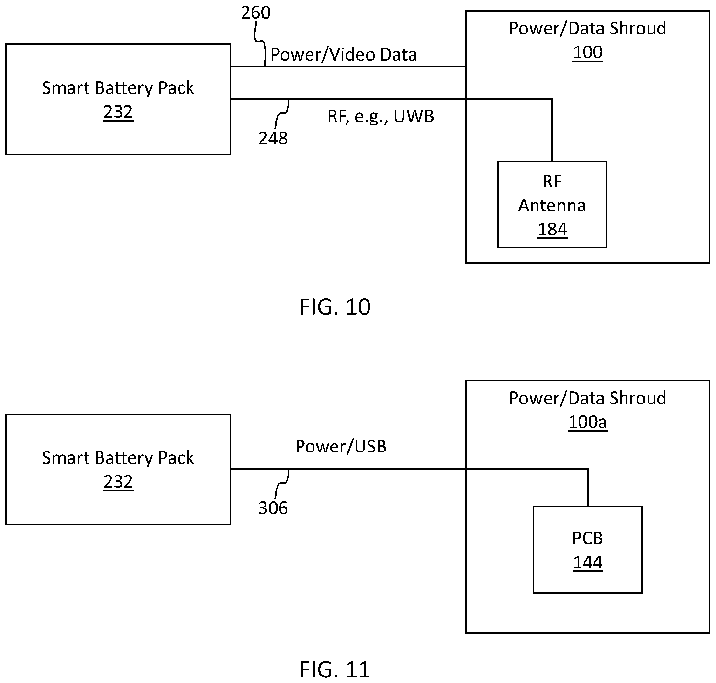

In certain embodiments, an optional coaxial connector assembly **172** includes a coaxial connector **176** secured within an aperture **180** on the side housing **136.** The connector **176** is secured within the opening with a threaded nut **178.** The coaxial connector **176** may be a type F female connector. The connector **176** is electrically coupled to a wireless communication antenna, e.g., an ultra wideband antenna **184,** which is configured to receive an RF signal from an imaging device or other video or data source, as described hereinbelow in reference to FIG. 10. In embodiments, video data may be provided by a local or remote imaging device (e.g., camera or sensor) or received from a remote video streaming source, such as a network-connected video feed. In embodiments, the video data may be provided by a weapon-mounted imaging device . In certain embodiments, the imaging device may be operatively connected to or integrated within a communications network, such as a node within an intra-soldier wireless communication network. Alternatively, the imaging device may be a standalone device.

Power, data, and control signals from the connector **164** are passed from the main board **144** to the power and data quick connect circuit board **152** via the connectors **150, 154.** This feature allows connection cabled battery packs to ANVGs and HUDs that utilize a quick disconnect hot shoe.

The signal from the connector **176** is passed to the power and data quick connect circuit board **152** via a cable **188.** The signals from the connectors **164** and **176** are then passed to a power and data quick connect contact array **190** disposed on the power and data quick connect circuit board **152.** The contact array is **190** is exposed through an opening **192** in the housing interface plate **116** such that the contacts are permitted to engage with a corresponding HMA complementary contact array (not shown) on the helmet mount assembly **120.** In embodiments, the contacts on the contact array **190** are contact pads and the contacts on the HMA complementary contact array are spring biased telescoping pins (pogo pins). The HMA complementary contact array, in turn is electrically coupled to corresponding contacts (not shown) disposed on a mounting carriage **196.** In certain embodiments, the corresponding contacts disposed on a mounting shoe receiver or similar receptacle **198** on the mounting carriage **196** are disposed for connecting to a night vision device or HUD device via a cable **200.**

The interface plate **116** is secured to the main housing **110** via threaded fasteners **204** passing through clearance openings in the main housing **110** and engaging threaded openings in the interface plate **116.**

Dampening members **208** such as grommets formed of rubber or other elastomeric or resilient material are attached within openings **212** on the interface plate **116.** The dampening members **208** are configured to compress to improve stability, provide compliance under load, and/or otherwise prevent movement, vibration, or rattling of the helmet mount assembly **120** in relation to the interface plate **116.**

In embodiments, the main housing **110** includes a central opening or aperture **216,** the interface plate **116** includes a central opening or aperture **220,** the main board **150** includes a central opening or aperture **224,** and the internal cover **130** includes a central opening or aperture **230,** wherein the openings **216, 220, 224, 228,** and **230** are aligned to accommodate mounting the shroud assembly **110** to the helmet **104** using a single hole mounting pattern.

In the illustrated exemplary embodiment, a smart battery pack assembly **232** includes a central housing **236** including video processing electronics, including without limitation, HUD video processing electronics, VA/AR video processing electronics, an ultra wideband receiver, and the like. Left and right side battery packs **240** are detachably coupled to the central housing **236.** In embodiments, the left and right side battery packs **240** are individually selectable and hot swappable. While a particular battery pack configuration is illustrated, it will be understood that other types of battery packs may be used in alternative embodiments.

The central housing **236** includes a threaded coaxial connector **244.** A coaxial cable **248** includes a first connector **250** which couples to the connector **176** and a second connector **252** which couples to the connector **244.** In embodiments, the connector **244** is a female type F connector and the connectors **250, 252** are male type F connectors.

The central housing **236** further includes a circular connector **256.** A circular power/data cable **260** includes a first connector **264** which couples to the connector **164** and a second connector **268** which couples to the connector **256.** In embodiments, the cables **248** and **260** are bundled within a sleeve **270,** which may advantageously comprise heat shrink tubing, for cable management and preventing cable tangling and snagging. It will be recognized that other cable management solutions may also be employed, such as braided sleeves, cable ties, cable wraps, and the like.

As best seen in FIG. 10, a cabled "legacy" signal variant is shown that allows quick connect don/doff actions via the HMA and the cables **248, 260** running back to the battery pack assembly **232.** In the illustrated embodiment, the battery pack assembly **232** provides a video/power cable connection as well as a coax cable connection that provides an interface to an RF (e.g., ultra wideband) antenna in the shroud assembly **100** to connect to a weapon and an EUD. In operation, a wireless RF data signal **272** is received by the antenna **172** and converted to an electrical signal, which is demodulated by the ultra wideband receiver **148,** which in turns transmits the signal to processing electronics **290** in the smart battery pack central housing **236** via the cable **248.**

With reference now to FIG. 12, which shows an exemplary networked system, the data **272** can come from any number of sources. In embodiments, the data includes wirelessly transmitted data which is transmitted over the wireless network **276.** In embodiments, the data is received from a weapon-mounted imaging device **280.** In embodiments, the weapon-mounted imaging device is a Family of Weapon Sights - Individual (FWS-I) and may include thermal imagery, targeting data, head up display data, augmented reality (AR) data, operational information, environmental information, sensor readout information, intelligence, surveillance, and reconnaissance (ISR) video stream, waypoints, messaging, navigation information, and the like. In embodiments, an ISR video feed is sent or received from an application **284** running on a mobile end user device (EUD) **288,** such as a smartphone, tablet, or other mobile computing device. In certain embodiments, application **284** is an Android Tactical Assault Kit (ATAK) application running on an Android-based mobile device.

The data received from the shroud assembly **110** is processed by the processor **290** on board the smart battery pack central module **236** to generate a signal suitable for display. The smart battery pack processor can also output system configuration information, system user interface navigation menus, static or dynamic images or symbols, other sensor readouts, among others. The processed signal is then transmitted back to the shroud assembly **110** over the power/data cable **260,** where it is routed through the electrical contacts **190** and output via the cable **200** to the ANVG/HUD connector **198** where the processed signal is delivered to an associated ANVG device **292** for visual overlay.

In the illustrated embodiment, an exemplary ENVG device **292** is depicted. In certain embodiments, the ENVG device **192** includes an image intensifier **296** and a thermal sensor **300** and a sensor fusion engine **304** which combines the night vision and thermal images to create a fused image. The processed signal from the shroud assembly **110** is received by an overlay engine **308** where it is combined with the fused image by a video mixer or compositor **312** and output to a display **316** for rendering in human-viewable form. The illustrated embodiment depicts an ENVG device **292;** however, it will be understood that in further embodiments, other types of visual augmentation systems may be employed, including systems incorporating digital displays, head-up displays, or near-eye displays, whether monocular, binocular, or see-through configurations. Although FIG. 12 illustrates an embodiment of the present development in conjunction with an ENVG, it will be understood by persons skilled in the art that the present invention is equally applicable to a wide range of display devices, including but not limited to ANVGs, HUDs, and other current or future-developed visual interface systems, regardless of specific configuration or technology.

In embodiments, video information and data is transmitted between the smart battery pack **232** and the shroud assembly **110** via the video/power cable **260** and the coaxial cable **248.** In certain embodiments data comes to and from the shroud **110** as already-converted SERDES signals.

In embodiments, the UWB transceiver **148** uses the ISW network **276** to connect with the weapon system **280,** such as an FWS-I and other compatible weapon sights, where video data can be streamed back to the smart battery pack **232** for additional processing, in the same way as the overlayed ISR video feeds the ISW video stream can return to the shroud from the battery pack and be overlayed such that the operator can see a view of the weapon system in real time. Data and HUD elements from the from the shroud assembly **110** also be sent to the weapon, so that the link between shroud assembly **110** and the ISW network **276** is bidirectional as well.

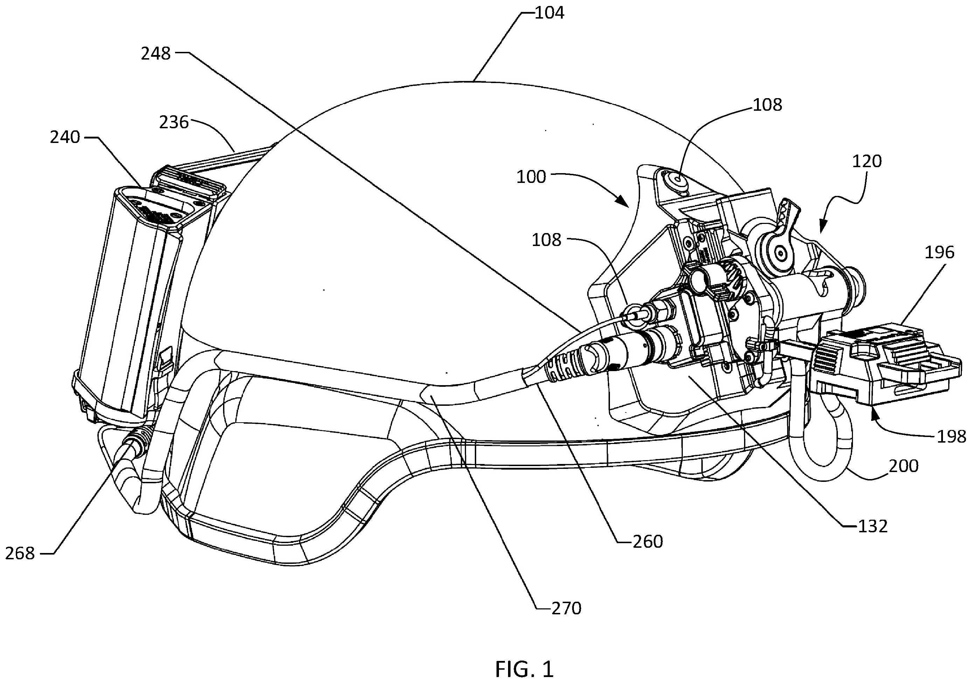

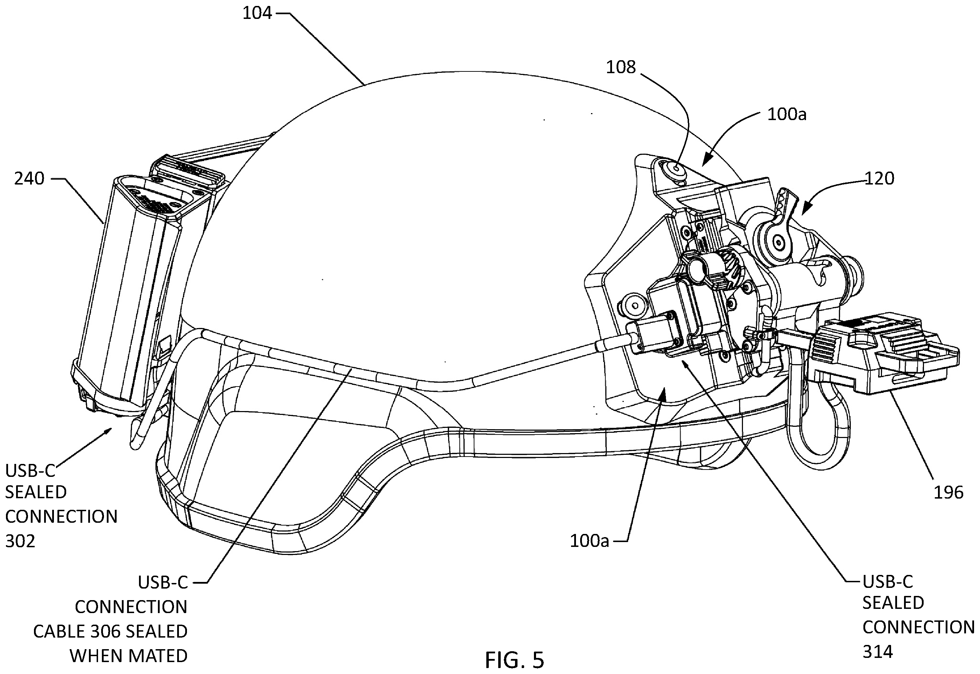

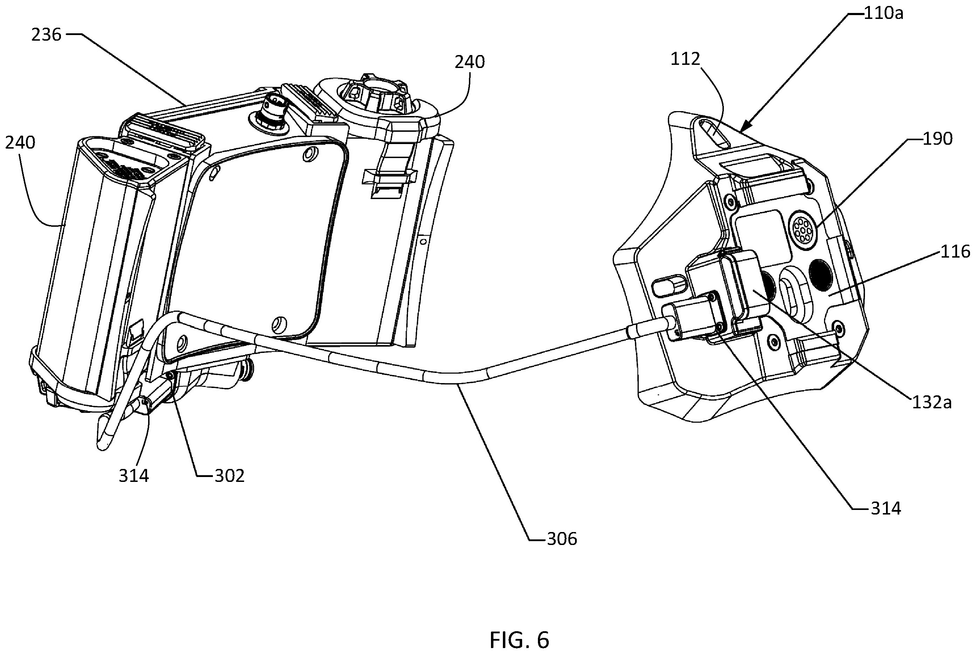

Referring now to FIGS. 5-9, there appears a second embodiment power and data shroud assembly **100a.** The shroud assembly **100a** is similar to the shroud assembly **100** described above by way of reference to FIGS. 1-4 and 10, except that the separate coaxial cable **248** and the power and data cable **260** and associated connector assemblies have been replaced with a USB cable **262** and corresponding USB connector assemblies. Except as specifically stated otherwise, the features, components, and functional relationships described with respect to the embodiment appearing in FIGS. 1-4 and 10 are also present and apply to the embodiment shown in FIGS. 5-9, even where not expressly repeated in the following description.

FIG. 5 depicts a power and data shroud assembly **100a** coupled to a helmet **104,** wherein the helmet **104** may be as described above.

The power and data shroud assembly **100a** is coupled to the helmet **104** using one or more threaded fasteners **108** and includes a main housing **110,** which may be formed of a material as described above. The threaded fasteners **108** pass through clearance openings **112** in the main housing **110** and engage an aligned threaded anchor point (not shown) on the helmet, which may be, e.g., a threaded insert formed of a metal such as stainless steel or aluminum. In embodiments, the fasteners **108** accommodate a standard attachment pattern for front helmet shroud, such as a 3-hole pattern as illustrated. Alternative attachment patterns are also contemplated, such as a single-hole pattern. It will be recognized that, as an alternative to, or in addition to, a threaded fastener attachment system, other attachment mechanisms may be provided, as hooks, straps, brackets, and the like.

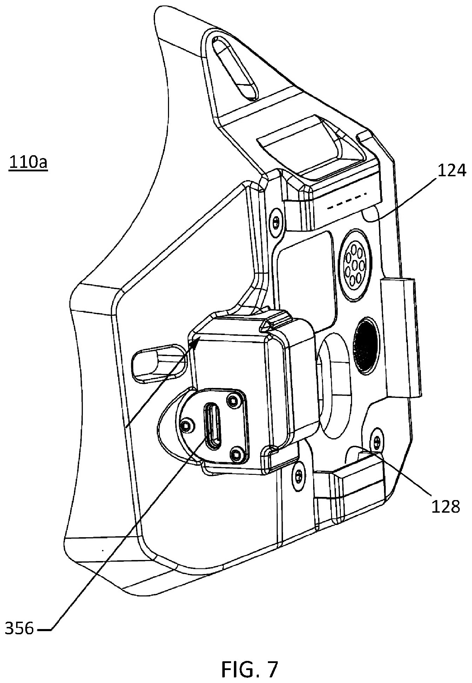

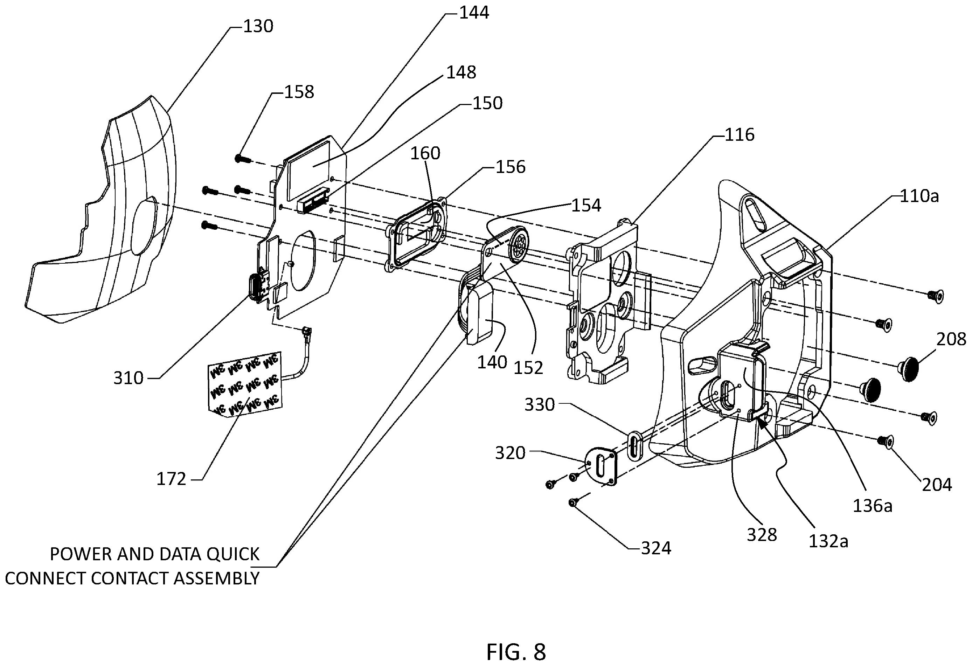

As best seen in FIGS. 7 and 8, the main housing **110** is coupled to an interface plate **116** configured to detachably couple to a helmet mount assembly **120.** The interface plate **116** may be formed of a material and include engagement features as described above. In the illustrated embodiment, the engagement features comprise upper and lower slots, lips, grooves, or receptacles **124** and **128,** respectively, which engage complementary tongues or tabs (not shown) on the helmet mount assembly **120.** The helmet mount assembly **120** may be as described above.

The shroud assembly **100a** includes a rear cover **130** at least partially enclosing the interior of the main housing **110** and may be formed of a material as described above.

The shroud assembly **100a** includes a power and data contact assembly **132a** having a side housing **136a** and a front housing **140.** A main circuit board **144** is received within the main housing **110** and includes a radio frequency (RF) transceiver **148** and associated processing electronics and is advantageously an ultra wideband (UWB) transceiver. The main circuit board **144** includes a connector **150** mounted on a surface thereof configured to operatively couple with a mating connector **154** (hidden and shown with broken lining) on a power and data quick connect circuit board **152.** A circuit board retainer **156** is disposed between the main circuit board **144** and the power and data quick connect circuit board **152.** The connector **150** extends through an opening **160** in the retainer **156** and engages the connector **154.** Threaded fasteners **158** pass through clearance openings in the main board **150,** and clearance openings in the retainer **156** to secure the main and power and data quick connect circuit boards **144, 152** to the main housing **110.**

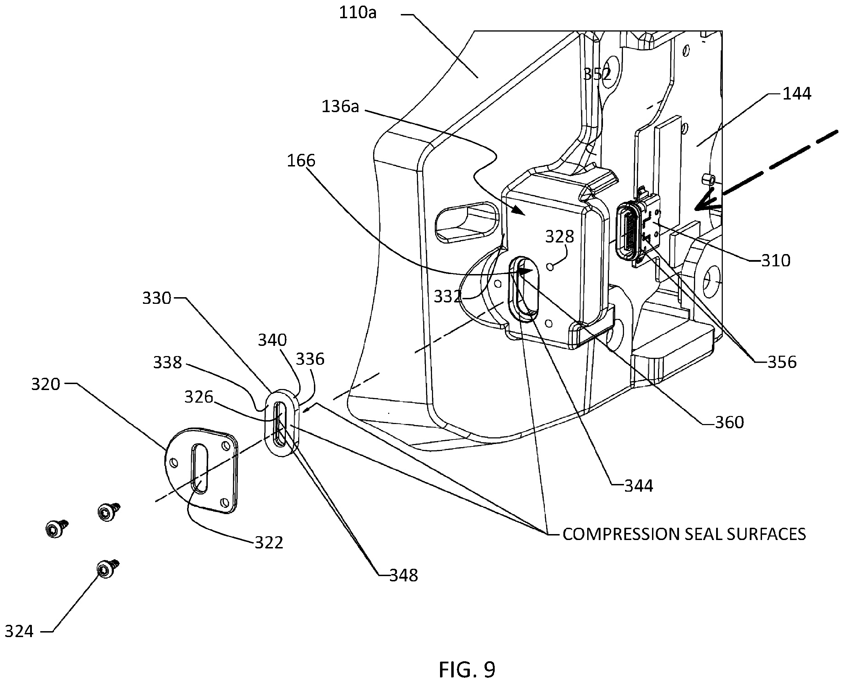

As best seen in FIG. 9, a USB-C connector socket assembly **310** is depicted, which is preferably a surface-mounted sealed USB-C connector. The connector assembly **310** is received within an elongated opening **166** in the side housing **136a** and is operably mounted on the main circuit board **154.** While a USB-C connector is illustrated, other connector types are also contemplated, including without limitation, USB-A, USB-B, mini USB, micro USB, or other suitable connector formats.

In the depicted preferred embodiment, a sealing gasket plate **320** is secured to the side housing **136a** with threaded fasteners **324** passing through clearance openings in the plate **320** and engaging threaded openings **328** in the side housing **136a.** A sealing gasket **330** is disposed intermediate the plate **320** and the side housing **136a.** The plate **320** includes an aperture **322** configured for receiving a USB-C plug connector therethrough. The gasket **330** includes an aligned aperture **326** configured for receiving the USB-C plug therethrough. The elongated opening **166** includes a recessed, inwardly projecting annular ridge or shoulder **332** within the opening **166.** The gasket **330** is formed of a resilient, compressible material, such as an elastomeric material, preferable a silicone material, and defines first and second opposing compression seal surfaces **336, 338.**

The gasket **330** is seated within the elongated opening **166** of the wall of the side housing **136a** such that the first compression seal surface **336** engages the inwardly projecting ridge or shoulder **332.** The second compression seal surface **338** of the gasket **330** engages the sealing plate **320.** When the sealing plate **320** is secured to the housing **136a** wall via the threaded fasteners **324,** upon tightening of the fasteners **324,** the sealing plate **320** compresses the gasket **330** to produce a sealing interference between (i) the second compression seal surface **338** and the sealing plate **320** and (ii) the first compression seal surface **336** and the inwardly projecting ridge or shoulder **336** of the opening **166.** The gasket **330** thereby provides a sealing interface against lateral ingress of moisture from directions along the plane of the housing **136a** and the plate **322.**

The gasket **330** includes an outer peripheral side wall **340** is configured to provide a piston or axial sealing engagement with an annular piston seal surface **344** of the opening **166,** thereby defining a first axial or piston sealing interference. The opening **326** includes one or more (two in the illustrated embodiment) annular inward projections **348** which are configured to engage a housing of a USB-C plug when it is received within the gasket opening **326** to thereby form a second axial or piston sealing interference. Preferably, the surface **344** and inward projections **348** are dimensioned to create radial compression when USB-C plug is received therethrough, to prevent axial ingress past the gasket **330.**

In the depicted preferred embodiment, the USB connector **310** includes a sealing gasket **350** secured at and surrounds the opening of the USB socket **310.** The gasket **350** includes a central opening **352** for receiving complementary USB-C plug connector. The gasket **350** includes a peripheral side wall comprising one or more (two in the illustrated embodiment) annular, radially outward projections **356** which are configured to engage an aligned and facing piston or axial seal surface **360** within the opening **166** to thereby form a third axial or piston sealing interference. Preferably, the seal surface **360** and the outward projections **356** are dimensioned to create radial compression during assembly to prevent axial ingress between the gasket **350** and the surface **360.**

An ultra wideband (UWB) antenna **184** is configured to receive an RF signal from an imaging device or other video or data source, such as described above by way of reference to FIG. 10. In certain embodiments, the imaging device may be operatively connected to or integrated within a communications network, such as a node within an intra-soldier wireless (ISW) communication network. Alternatively, the imaging device may be a standalone device.

The UWB antenna **184** is operatively coupled to the main board **144** and the UWB transceiver. Video, power, data, and control signals received at the connector **310** are passed to processing electronics **290** (see FIG. 11) on the main board **144,** which may include one or more processors, controllers, signal processors, field programmable gate arrays (FPGAs), and the like.

The signal to and from the connector **310** is passed to the power and data quick connect circuit board **152** via a cable/conductive elements **188.** The signals from the connector **310** are then passed to the quick connect contact array **190** disposed on the power and data quick connect circuit board **152.** The contact array is **190** is exposed through an opening **192** in the housing interface plate **116** such that the contacts are permitted to engage with a corresponding HMA complementary contact array (not shown) on the helmet mount assembly **120.** In embodiments, the contacts on the contact array **190** are contact pads and the contacts on the HMA complementary contact array are spring biased telescoping pins (pogo pins). The HMA complementary contact array, in turn is electrically coupled to corresponding contacts (not shown) disposed on a mounting carriage **196.** In certain embodiments, the corresponding contacts disposed on a mounting shoe receiver or similar receptacle **198** on the mounting carriage **196** are disposed for connecting to a night vision device or HUD device via a cable **200.**

The interface plate **116** is secured to the main housing **110** via threaded fasteners **204** passing through clearance openings in the main housing **110** and engaging threaded openings in the interface plate **116.**

Dampening members **208** such as grommets formed of rubber or other elastomeric or resilient material are attached within openings **212** on the interface plate **116.** The dampening members **208** are configured to compress to improve stability, provide compliance under load, and/or otherwise prevent movement, vibration, or rattling of the helmet mount assembly **120** in relation to the interface plate **116.**

In embodiments, the main housing **110** includes a central opening or aperture **216,** the interface plate **116** includes a central opening or aperture **220,** the main board **150** includes a central opening or aperture **224,** and the internal cover **130** includes a central opening or aperture **230,** wherein the openings **216, 220, 224, 228,** and **230** are aligned to accommodate mounting the shroud assembly **110** to the helmet **104** using a single hole mounting pattern.

A smart battery pack assembly **232** includes a central housing **236** including video processing electronics, including without limitation, HUD video processing electronics, VA/AR video processing electronics, an ultra wideband receiver, and the like. Left and right side battery packs **240** are detachably coupled to the central housing **236.** In embodiments, the Left and right side battery packs **240** are individually selectable and hot swappable.

The central housing **236** includes a USB-C socket **302.** A USB-C cable **306** includes USB-C connector plugs **314** couple to the USB-C socket connectors **310** and **302.**

Referring now to FIG. 11, there is illustrated the cabled USB signal variant of the power and data shroud **100a** that allows a single USB cable **306** that connects from a smart battery pack assembly **232** or, alternatively, a smart rail (not shown). The USB connection provides video, power, control, and RF packetized information.

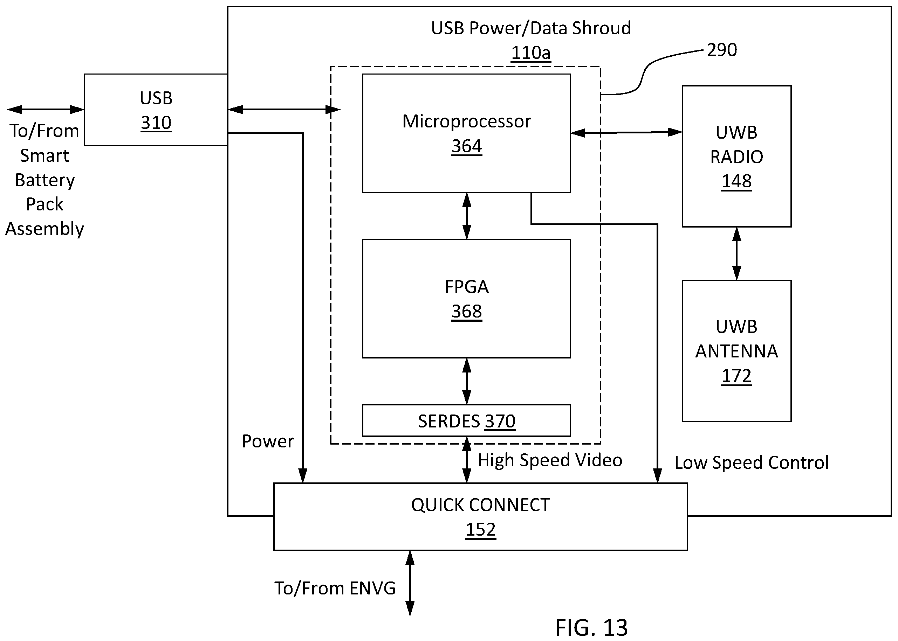

Referring now to FIG. 13, the cabled USB signal variant helmet mount assembly **110a** allows a single USB cable **306** that connects from the smart battery pack **236** or, alternatively, a smart rail (not shown). The USB connection provides video, power, control, and RF packetized information. In embodiments, a microprocessor/microcontroller **364** converts the USB data signals to an intermediate video bus that could be a mobile industry processor interface (MIPI), RGB parallel data interface, or a similar memory mapped parallel memory interface. That intermediate interface connects to an FPGA **368** which controls overlay functionality and converts data to a set of SERDES channels **370** to connect to the ENVG/ANVG. The microcontroller/microprocessor **364** also extracts RF packet data and communicates to the RF (e.g., UWB) radio **148** and subsequent antenna **172** to connect to a weapon system such as a weapon system **280** (see FIG. 12) and a user system, such as an end user device **288** (see FIG. 12).

In embodiments, the USB port **310** supports connections to power sources that comply with the USB Power Delivery (USB PD) protocol and/or to legacy power sources providing fixed output voltages (e.g., 5V, 9V, 12V). In embodiments, the shroud **110a** includes power management circuitry configured to detect the input voltage level and regulate it to a suitable operating voltage for internal use, for example, using a USB Power Delivery (USB PD) controller configured to negotiate power delivery parameters with compliant battery packs.

The invention has been described with reference to the preferred embodiment. Modifications and alterations will occur to others upon a reading and understanding of the preceding detailed description. It is intended that the invention be construed as including all such modifications and alterations insofar as they come within the scope of the appended claims.

## Claims

1. A helmet shroud assembly configured to be mounted to a front portion of a helmet, the helmet shroud assembly comprising:
a main housing configured to be affixed to the helmet;
a helmet mount assembly interface portion configured to couple to a helmet mount assembly for supporting a visual augmentation system forward of an eye of a user;
an input interface comprising at least one electrical connector configured to receive electrical power and data;
an output interface disposed on the helmet mount assembly interface portion, the output interface comprising a plurality of electrical contacts configured to engage corresponding contacts of the helmet mount assembly upon coupling; and
circuitry disposed within the main housing and electrically coupling the input interface and the output interface.

2. The helmet shroud assembly of claim 1, wherein the input interface comprises at least one electrical connector configured to receive power, data, or a combination thereof.

3. The helmet shroud assembly of claim 2, wherein the input interface comprises at least one electrical connector selected from the group consisting of:
a circular multipin connector;
a coaxial connector;
a USB connector; and
a coaxial connector configured to receive a signal representative of video data, image data, overlay data, control data, or any combination thereof from a local or remote imaging device.

4. The helmet shroud assembly of claim 1, wherein the input interface comprises at least one of:
an antenna configured to receive a wireless signal representative of data selected from the group consisting of image data, video data, overlay data, control data, and any combination thereof; and
a connector housing supported on the main housing and electrically coupled to a main circuit board within the main housing.

5. The helmet shroud assembly of claim **1,** wherein the input interface is operably coupled to a wireless transceiver.

6. The helmet shroud assembly of claim 5, wherein the main circuit board is operatively coupled to an output interface housing supporting the output interface.

7. The helmet shroud assembly of claim 1, further comprising a cover disposed on a rear side of the main housing wherein the cover is configured to at least partially enclose an interior of the main housing.

8. The helmet shroud assembly of claim 1, further comprising one or more openings formed in the main housing and configured to receive a mechanical fastener for attaching the helmet shroud assembly to the helmet.

9. The helmet shroud assembly of claim **1,** wherein the interface portion comprises an interface plate.

10. The helmet shroud assembly of claim **1,** wherein the output interface comprises a contact array exposed through an opening in the interface plate.

11. A system comprising the helmet shroud assembly of claim 1 in combination with any one or more of:
the helmet;
the helmet mount assembly; and
the visual augmentation system.

12. The system of claim 11, further comprising a remote device configured to transmit electrical power, data, or both to the helmet shroud assembly.

13. The system of claim 12, wherein the remote device comprises one or more battery packs and video processing electronics, the remote device configured to transmit electrical power and data to the helmet shroud assembly.

14. The system of claim 13, wherein the remote device is configured to be mounted to a rear portion of the helmet.

15. The system of claim 14, wherein the remote device is configured to wirelessly transmit data to the helmet shroud assembly, wherein the helmet shroud assembly is configured to receive the data via an antenna and route the data to the output interface for presentation by the visual augmentation system.
